# EUROPEAN PATENT SPECIFICATION

(11) **EP 3 213 908 B1**
(45) Date of publication and mention of the grant of the patent: **24.10.2018**
(21) Application number: 17159077.1
(22) Date of filing: 03.03.2017
(51) Int. Cl.: B29D 11/00, B29C 33/70, G01N 21/3554, G01N 25/56, G01N 21/3504

(54) **METHOD FOR THE DETERMINATION OF RESIDUAL MOISTURE ON AND/OR WITHIN A LENS FORMING SURFACE**
VERFAHREN ZUR BESTIMMUNG VON RESTFEUCHTE AUF UND/ODER IN EINER LINSENFORMUNGSOBERFLÄCHE
PROCÉDÉ DE DÉTERMINATION DE L'HUMIDITÉ RÉSIDUELLE SUR UNE SURFACE DE FORMATION DE LENTILLE OU À L'INTÉRIEUR DE CELLE-CI

(30) Priority: 04.03.2016 US 201662303798 P
(43) Date of publication of application: 06.09.2017
(73) Proprietor: Novartis AG, 4056 Basel (CH)
(72) Inventor: HEIDRICH, Halina, 63796 Kahl am Main (DE); TONN, Thomas, 63739 Aschaffenburg (DE)
(74) Representative: Bohest AG

(56) References cited:
- EP-A2- 0 969 956
- US-A1- 2006 117 591
- US-A1- 2013 147 072
- US-A1- 2015 293 015
- US-B1- 6 410 916
- US-B1- 8 374 438

## Description

### FIELD OF THE INVENTION

The invention relates to a method for the determination of residual moisture on and/or within a lens forming surface of a mold half. The invention also relates to an automated manufacturing line for ophthalmic lenses, such as contact lenses, which is adapted for carrying out the method according to the invention.

### BACKGROUND

Contact lenses from a wide range of materials are nowadays produced in great volumes using highly automated manufacturing lines. Advantageously, these contact lenses are formed using reusable mold halves, a female and a corresponding male mold half, which may be formed from materials such as glass and/or quartz. When mated to form a mold, these mold halves define a hollow lens cavity that corresponds to the subsequent contact lens shape. Before closing the mold halves, a lens forming material such as a polymer or pre-polymer solution or mixture is dosed into the female mold half. After closing the mold halves, UV light is radiated through one of the mold halves, which leads to a crosslinking of the lens forming material in the lens cavity. Suitable polymers formed by photochemical polymerization of suitable pre-polymers include but are not limited to polymers based on polyvinyl alcohols (PVA) or silicone hydrogels (SiHy) as well as polymers based on polyethylene glycols (PEG). Subsequently, the mold is opened and the contact lens is removed, for example, with suction grippers or mechanical grippers, transported to further processing/treatment stations, and is finally placed in a contact lens package.

In particular in combination with the use of low viscosity lens forming materials, such as for example silicon hydrogels, it may occur, that air bubbles are entrapped in a boundary region of the lens forming material and the female mold half when the lens forming material is dosed into the female mold half, or may be entrapped at the boundary surface of the lens forming material and the male mold half as the male mold half is placed on the female mold half for closing the mold. One reason for the formation of air bubbles may be a non-uniform and non-symmetric wetting of the respective mold half by the lens forming material. For example, when the male mold half is advanced towards the lens forming material in the female mold half and the first contact of the lens forming surface of the male mold half does not occur at the center of the male lens forming surface, this may result in a non-symmetrical spreading of the lens forming material across the male lens forming surface. Due to this non-symmetrical spreading of the lens forming material the male lens forming surface is wetted non-symmetrically. This may result in an entrapment of air bubbles. A corresponding entrapment of air bubbles may arise during dosing of the lens forming material into the female mold half at the center of the lens forming surface of the female mold half. Entrapped air bubbles may lead to a poor lens quality, thus resulting in an inacceptable quality and the lens having to be sorted out.

In order to avoid the entrapment of air bubbles the lens forming surface of the male and/or of the female mold half may be electrostatically charged prior to the lens forming surface coming into contact with the lens forming material. By providing the lens forming surface with an electrostatic charge a controlled contact of the lens forming material with the lens forming surface of the mold half may be ascertained. The electrostatic charge on the lens forming surface, typically a positive charge, results in an attraction of the typically polar lens forming material to the lens forming surface at the location where the charge has been deposited on the lens forming surface. Thus, the region of first and subsequent contact of the lens forming surface with the lens forming material may be controlled, thereby avoiding arbitrary contacts which include the risk of entrapment of air bubbles.

During the manufacture of contact lenses the mold halves come into contact with water at several processing stations. For example, after UV-crosslinking of the lens forming material, the contact lenses are loosened from the lens forming surfaces of the mold halves with the aid of water. In a further step the lenses are completely removed from the mold halves and transported to a further processing station, such as for example an extraction station, again with the aid of water. After the lenses have been removed from the mold halves, the mold halves are cleaned and rinsed with water in order to remove any residues of lens forming material therefrom. Subsequently the mold halves are dried, for example with pressurized air, before they may be re-entered into the lens manufacturing line for the manufacture of additional lenses.

At the beginning of a new manufacturing cycle at least the lens forming surface of the male mold half is electrostatically charged. Due to the extensive exposure of the mold half to water during cleaning and rinsing, the lens forming surface may contain a certain amount of residual moisture, even though the lens forming surface appears to be dry when inspected visually. Due to the presence of residual moisture on and/or within the lens forming surface of the (male) mold half, the process of depositing an electrostatic charge on the lens forming surface may not be accomplished satisfactorily. With the lens forming surface of the (male) mold half being electrostatically charged only insufficiently or not being electrostatically charged at all, air bubbles may be entrapped in the lens forming material which may lead to a poor and even an inacceptable quality and the lens having to be sorted out, thus reducing the yield of the lens manufacturing process.

US 2015/0293015 discloses a method to determine the moisture in die cast molds.

EP 0 969 956 discloses a manufacturing line for the manufacture of ophthalmic lenses according to the preamble of independent claim 13.

It is therefore an object of the present invention to provide a remedy to the aforementioned problems. A method shall be provided which allows for an easy and fast determination of residual moisture on and/or within a lens forming surface. The method shall be easily accomplished and shall allow an easy integration thereof into known automated lens manufacture processes.

### SUMMARY OF THE INVENTION

In accordance with a first embodiment of the invention a method for determining residual moisture on and/or within a lens forming surface of a mold half is provided which comprises the steps of
carrying out an infrared inspection of at least a central portion of the lens forming surface of the mold half with the aid of an infrared camera,
collecting measurement values resulting from the infrared inspection, which represent a degree of residual moisture on and/or within the lens forming surface,
comparing the collected measurement values with a predefined threshold value representing a maximum tolerable residual moisture on and/or within a lens forming surface of a reference mold half, and
upon detection of an exceedance of the predefined threshold value representing the maximum tolerable residual moisture, preventing the inspected mold half from being used further.

In accordance with one aspect of the method according to the invention, upon preventing the inspected mold half from being used further the inspected mold half may be returned to a processing station preceding the infrared inspection for further reduction of the residual moisture. Optionally, process parameters within the processing station for reduction of the residual moisture on and/or within the lens forming surface of the mold half may be modified.

In accordance with yet another aspect of the method according to the invention, the process parameters (which may optionally be modified in the processing station for reduction of the residual moisture) include temperature, exposure time, flow rate of a venting medium and degree of evacuation.

In accordance with a further aspect of the method according to the invention, by the infrared inspection of the lens forming surface a latent heat of evaporation of liquid over time may be determined.

In accordance with another aspect of the method according to the invention, the predefined threshold value representing the maximum tolerable residual moisture on and/or within the lens forming surface of the reference mold half may be obtained from infrared inspections of lens forming surfaces of mold halves which have been found acceptable for being used further.

In accordance with yet a further aspect of the method according to the invention, the predefined threshold value representing the maximum tolerable residual moisture may be obtained from an evaluation of latent heat of evaporation of liquid over time measurements of inspected acceptable mold halves of the same kind, i.e. male or female mold halves.

In accordance with another aspect of the method according to the invention, the predefined threshold value representing the maximum tolerable residual moisture is defined as the minimum change of latent heat of evaporation over time in mK/s.

In accordance with a still further aspect of the method according to the invention, a high resolution infrared camera may be used for the infrared inspection of the lens forming surface.

In accordance with another aspect of the method according to the invention, the high resolution infrared camera used for the inspection of the lens forming surface may have a thermal sensitivity at or better than 50 mK at 30°C (that is, a thermal sensitivity capable of reporting temperature differences of 50 mK or less at 30°C).

In accordance with yet another aspect of the method according to the invention, in addition to the central portion the lens forming surface may be inspected in at least one further portion located radially outwardly from the central portion of the lens forming surface.

In accordance with a further aspect of the method according to the invention, the lens forming surface inspected with the aid of the infrared camera is the lens forming surface of a male mold half.

In accordance with a still further aspect of the method according to the invention, the inspection of the lens forming surface may be carried out after drying the lens forming surface and before electrostatically charging the lens forming surface.

In accordance with a further aspect of the invention an automated manufacturing line for the manufacture of ophthalmic lenses, for example contact lenses such as soft contact lenses, is provided, which comprises a number of lens manufacturing stations and includes cooperating male and female mold halves, which may be assembled to form reusable molds for the manufacture of the ophthalmic lenses from a lens forming material, and which further comprises a cleaning, rinsing and drying station for the mold halves, and an infrared inspection station for carrying out an inspection of at least a central portion of the lens forming surface of a mold half with the aid of an infrared camera for at least qualitatively determining a degree of residual moisture on and/or within a lens forming surface of the mold half.

In accordance with one aspect of the manufacturing line according to the invention the infrared inspection station may be arranged ahead of a charging station for electrostatically charging the lens forming surface of at least one of the cooperating male and female mold halves.

In accordance with another aspect of the manufacturing line according to the invention, the infrared inspection station may include a high resolution infrared camera having a thermal sensitivity at or better than 50 mK at 30°C.

The method and manufacturing line according to the invention offers several advantages. A mold half having too high a degree of residual moisture on and/or within its lens forming surface is prevented from being further used so that an insufficient deposit of electrostatic charge or a complete failure in depositing such charge may be avoided, which otherwise may lead to the entrapment of air bubbles and may thus result in a poor and even an inacceptable quality and in that the lens may have to be sorted out, thus reducing the yield of the lens manufacturing process. By using only mold halves which have been ascertained to have acceptable (maximum tolerable) degrees of residual moisture a subsequent deposit of electrostatic charge on the lens forming surfaces may be carried out satisfactorily and reproducibly.

While the advantages of the method according to the invention have been described with specific reference to the depositing of an electrostatic charge on the lens forming surface of a mold half, it will be appreciated that an infrared inspection of the mold halves may be carried out in all process stages in which the mold halves come into contact with water, must be dried thereafter and where a residual moisture on and/or within the lens forming surfaces may have an impact on the quality of the manufactured lens. The method according to the invention also allows for a comparison of different drying processes and the identification of that drying process which is most suitable for the used kinds of molds. The method is highly sensitive and allows the identification of residual moisture and small droplets on and/or within the lens forming surface of a mold half which otherwise might be non-detectable by visual inspection.

Upon being prevented from being used further, the inspected mold half may be returned to a processing station preceding the infrared inspection for further reduction of the residual moisture. Optionally process parameters within the process station for reduction of the residual moisture on and/or within the lens forming surface of the mold half may be modified in order to ascertain a sufficient drying of the lens forming surfaces. The process parameters for optional modification may include temperature, exposure time, flow rate of a venting medium and even a degree of evacuation in case of a drying process involving the application of a vacuum.

By inspecting the lens forming surface with the aid of an infrared camera a latent heat of evaporation of liquid over time may be determined. While the detection and measurement of the latent heat of evaporation may not result in an immediate quantification of the degree of residual moisture, it constitutes a comparably fast and accurate method for qualitatively determining the degree of residual moisture and allows for a quick comparison with a reference mold half whose lens forming surface has an acceptable degree of residual moisture.

The predefined threshold value representing the maximum tolerable residual moisture on and/or within a lens forming surface of a reference mold half may be obtained from infrared inspections of lens forming surfaces of mold halves, which have been found acceptable for being used further. Such reference measurements may be carried out ahead of and distinct from the actual manufacturing process. They may be repeated from time to time in order to ascertain proper threshold values.

The predefined threshold value representing the maximum tolerable residual moisture may be obtained from an evaluation of latent heat of evaporation of liquid over time measurements of inspected acceptable mold halves of the same kind, i.e. male or female mold halves. Measurements of latent heat of evaporation over time lead to material specific and water treatment specific graphs which are reproducible and may provide an accurate qualitative representation of residual moisture present on and/or within the lens forming surfaces of the mold halves. The measurements are sensitive with regard to the degree of residual moisture. Ambient influences can be avoided without unreasonable difficulties.

The predefined threshold value representing the maximum tolerable residual moisture may be defined as the minimum change of latent heat of evaporation ΔT_{R} over time (in mK/s), wherein "mK" stands for the absolute temperature measured in milli-Kelvin and "s" stands for the time measured in seconds.

In order to improve sensitivity of the inspection method a high resolution infrared camera may be used for the inspection of the lens forming surface. Suitable results can be achieved by carrying out the method according to the invention with the aid of a high resolution infrared camera having a thermal sensitivity at or better than 50 mK at 30°C.

The method according to the invention may be carried out even more accurately by inspecting, in addition to the central portion, the lens forming surface in at least one further portion located radially outwardly from the central portion of the lens forming surface.

The method according to the invention may be carried out on both, the lens forming surfaces of male and female mold halves. Inspection of the lens forming surfaces of the male mold halves only may, however, be sufficient. An air entrapment at the lens forming surfaces of the female mold halves is less likely to happen. Therefore, in embodiments of the lens manufacturing processes it is sometimes abstained from depositing an electrostatic charge on the lens forming surfaces of female mold halves and thus, the problem of residual moisture on the lens forming surfaces of female mold halves is less critical.

While the method according to the invention may be carried out at any process stage in which the mold halves may come into contact with water and in which the presence of residual moisture may prove critical to the quality of the manufactured lenses, it may be advantageous that the infrared inspection of the lens forming surface is carried out after drying the lens forming surface of the mold half and before electrostatically charging the lens forming surface.

The method and manufacturing line according to the invention may be used to improve the quality and the yield in the automated manufacture of ophthalmic lenses, for example contact lenses such as soft contact lenses, employing reusable mold assemblies, consisting of corresponding male and female mold halves.

### BRIEF DESCRIPTION OF THE DRAWINGS

Further details and advantages of the invention will become apparent from the following description of an exemplary embodiment thereof, reference being made to the drawings which are not to scale, in which:
- Fig. 1: is a schematic representation of a measurement setup for carrying out the method according to the invention; and
- Fig. 2: shows an exemplary graph of measured latent heat evaporation over time which may be obtained by carrying out an infrared inspection of a lens forming surface of a mold half in accordance with the invention.

### DESCRIPTION OF EMBODIMENTS

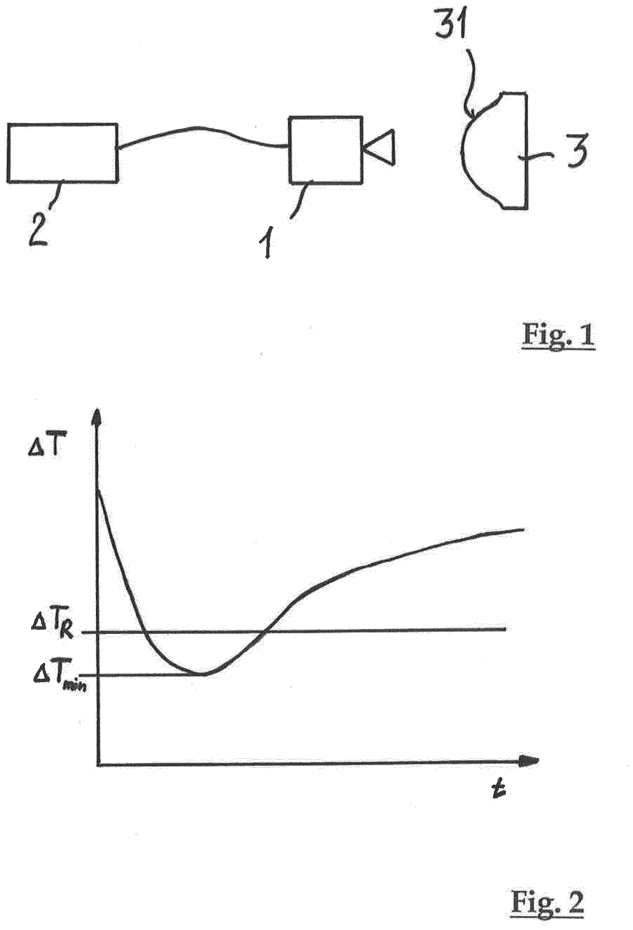

The measurement setup, which is depicted schematically in Fig. 1, may for example be part of an infrared inspection station which may be included in addition to the various lens manufacturing stations of an automated manufacturing line for the manufacture of ophthalmic lenses, for example contact lenses such as soft contact lenses. The infrared inspection station may for example be arranged in between a cleaning, rinsing and drying station for mold halves and a charging station for electrostatically charging a lens forming surface of at least one of a pair of corresponding male and female mold halves. The measurement setup comprises an infrared camera 1 which is connected with an evaluation unit 2 including an electronic storage unit. The evaluation unit 2 may be equipped with human interface devices for the entry and output of programs and data. Thus, for example the infrared camera 1 may be controlled with the aid of the evaluation unit 2. The evaluation unit 2 may for example be a desktop or a laptop computer. The infrared camera 1 may be a high resolution infrared camera having a thermal sensitivity at or better than 50 mK (milli-Kelvin) at 30°C. Examples for such infrared cameras are the ImageIR® infrared cameras such as the ImageIR® Series 7300 cameras, for example the type ImageIR® 7325, by the company InfraTec GmbH, Dresden, Germany.

With the aid of the infrared camera 1 a lens forming surface 31 of a mold half 3 may be inspected. The inspection may be concentrated to at least a central portion of the lens forming surface 31. If deemed necessary, in addition to the central portion of the lens forming surface 31 further portions of the lens forming surface 31 may be inspected which are located radially outwardly from the central portion, that is to say in a peripheral portion of the lens forming surface.

By this infrared inspection the mold half 3 coming from the drying process within the cleaning, rinsing and drying station may be examined for its degree of residual moisture on and/or within the lens forming surface 31. By inspecting the lens forming surface 31 with the aid of the infrared camera 1 a latent heat of evaporation of liquid from the lens forming surface 31 over time may be determined. An example of such measurement values is depicted in Fig. 2. From the obtained measurement values a minimum of latent heat of evaporation ΔTₘᵢₙ in mK/s (milli-Kelvin per second) may be determined, which represents the detected residual moisture of the inspected lens forming surface 31. The so determined value ΔTₘᵢₙ is then compared with a predefined threshold value representing a maximum tolerable residual moisture on and/or within a lens forming surface of a reference mold half, which has been found acceptable for the mold half for being used further, for example for being moved on to the charging station where an electrostatic charge is deposited on the mold half. The predefined threshold value representing the maximum tolerable residual moisture is defined as the minimum change of latent heat of evaporation ΔT_{R} over time in mK/s of an acceptable reference mold half.

The predefined threshold value ΔT_{R} representing the maximum tolerable residual moisture may be obtained from an evaluation of latent heat of evaporation of liquid over time measurements of inspected acceptable mold halves of the same kind, i.e. male or female mold halves. Measurements of latent heat of evaporation over time lead to material specific and water treatment specific graphs which are reproducible and may provide an accurate qualitative representation of residual moisture present on and/or within the lens forming surfaces of the mold halves. The measurements are sensitive with regard to the degree of residual moisture. Ambient influences can be avoided without unreasonable difficulties.

Upon detection of an exceedance of the predefined threshold value representing the maximum tolerable residual moisture, the inspected mold half is prevented from being used further. Instead, the mold half may be returned to the cleaning, rinsing and drying station preceding the infrared inspection for further drying and reduction of the residual moisture. Optionally, process drying parameters may be modified in order to ascertain a sufficient drying of the lens forming surfaces. The process parameters for optional modification may include temperature, exposure time, flow rate of a venting medium and even a degree of evacuation in case of a drying process involving the application of a vacuum.

The method according to the invention has been explained by way of example with the aid of an infrared inspection of the lens forming surface 31 of a male mold half 3. It must be noted though, that the infrared inspection may be carried out on both, the lens forming surfaces of male and female mold halves. However, inspection of the lens forming surfaces of the male mold halves only may be sufficient, as air entrapment at the lens forming surfaces of the female mold halves is less likely to happen. Therefore, in embodiments of the lens manufacturing processes it is sometimes abstained from depositing an electrostatic charge on the lens forming surfaces of female mold halves and thus, the problem of residual moisture on the lens forming surfaces of female mold halves is less critical.

Although the invention has been described with reference to a specific embodiment, it is evident to the person skilled in the art that this embodiment stands only by way of example for the general inventive concept, and that various changes and modifications are conceivable without departing from the teaching underlying the invention. Therefore, the invention is not intended to be limited by the embodiment described, but rather is defined by the appended claims.

## Claims

1. A method for determining residual moisture on and/or within a lens forming surface of a mold half, the method comprising the steps of
carrying out an infrared inspection of at least a central portion of the lens forming surface of the mold half with the aid of an infrared camera,
collecting measurement values resulting from the infrared inspection, which represent a degree of residual moisture on and/or within the lens forming surface,
comparing the collected measurement values with a predefined threshold value representing a maximum tolerable residual moisture on and/or within a lens forming surface of a reference mold half, and
upon detection of an exceedance of the predefined threshold value representing the maximum tolerable residual moisture, preventing the inspected mold half from being used further.

2. The method of claim 1, wherein upon preventing the inspected mold half from being used further, the inspected mold half is returned to a processing station preceding the infrared inspection for further reduction of the residual moisture, and wherein optionally process parameters within the processing station for reduction of the residual moisture on and/or within the lens forming surface of the mold half are modified.

3. The method of claim 2, wherein the process parameters include temperature, exposure time, flow rate of a venting medium and degree of evacuation.

4. The method of any one of the preceding claims, wherein by the infrared inspection of the lens forming surface a latent heat of evaporation of liquid over time is determined.

5. The method of any one of the preceding claims, wherein the predefined threshold value representing the maximum tolerable residual moisture on and/or within the lens forming surface of the reference mold half is obtained from infrared inspections of lens forming surfaces of mold halves which have been found acceptable for further processing.

6. The method of claim 5, wherein the predefined threshold value representing the maximum tolerable residual moisture is obtained from an evaluation of latent heat of evaporation of liquid over time measurements of inspected acceptable mold halves of the same kind, i.e. male or female mold halves.

7. The method of claim 6, wherein the predefined threshold (limit) value representing the maximum tolerable (a limit) residual moisture is defined as the minimum change of latent heat of evaporation over time.

8. The method of any one of the preceding claims, wherein a high resolution infrared camera is used for the infrared inspection of the lens forming surface.

9. The method of claim 8, wherein the high resolution infrared camera used for the inspection of the lens forming surface has a thermal sensitivity better than 50 mK at 30°C.

10. The method of any one of the preceding claims, wherein in addition to the central portion the lens forming surface is inspected in at least one further portion located radially outwardly from the central portion of the lens forming surface.

11. The method of any one of the preceding claims, wherein the lens forming surface inspected with the aid of the infrared camera is the lens forming surface of a male mold half.

12. The method of any one of the preceding claims, wherein the inspection of the lens forming surface is carried out after drying the lens forming surface and before electrostatically charging the lens forming surface.

13. An automated manufacturing line for the manufacture of ophthalmic lenses, for example contact lenses such as soft contact lenses, comprising a number of lens manufacturing stations and including cooperating male and female mold halves, which may be assembled to form reusable molds for the manufacture of the ophthalmic lenses from a lens forming material, and comprising a cleaning, rinsing and drying station for the mold halves, **characterized in that** it comprises an infrared inspection station for carrying out an inspection of at least a central portion of the lens forming surface of a mold half with the aid of an infrared camera for at least qualitatively determining a degree of residual moisture on and/or within a lens forming surface of the mold half.

14. The manufacturing line of claim 13, wherein the infrared inspection station is arranged ahead of a charging station for electrostatically charging the lens forming surface of at least one of the cooperating male and female mold halves.

15. The manufacturing line of claim 13 or 14, wherein the infrared inspection station includes a high resolution infrared camera having a thermal sensitivity better than 50 mK at 30°C.

## Patentansprüche

1. Verfahren zum Bestimmen einer Restfeuchtigkeit auf und/oder innerhalb einer Linsenformungsoberfläche einer Formhälfte, wobei das Verfahren die folgenden Schritte umfasst:
Ausführen einer Infrarotinspektion von wenigstens einem zentralen Teil der Linsenbildungsoberfläche der Formhälfte mittels einer Infrarotkamera,
Sammeln von Messwerten, die aus der Infrarotinspektion resultieren und die einen Grad von Restfeuchtigkeit auf und/oder innerhalb der Linsenformungsoberfläche repräsentieren,
Vergleichen der gesammelten Messwerte mit einem vordefinierten Schwellenwert, der eine maximale zulässige Restfeuchtigkeit auf und/oder innerhalb einer Linsenformungsoberfläche einer Referenzformhälfte repräsentiert, und
bei Detektion einer Überschreitung des vordefinierten Schwellenwertes, der die maximale zulässige Restfeuchtigkeit repräsentiert, Verhindern, dass die inspizierte Formhälfte weiterverwendet wird.

2. Verfahren nach Anspruch 1, wobei beim Verhindern, dass die inspizierte Formhälfte weiterverwendet wird, die inspizierte Formhälfte zu einer Verarbeitungsstation vor der Infrarotinspektion zurückgeschickt wird zur weiteren Reduzierung der Restfeuchtigkeit, und wobei optional Prozessparameter innerhalb der Verarbeitungsstation zur Reduzierung der Restfeuchtigkeit auf und/oder innerhalb der Linsenformungsoberfläche der Formhälfte modifiziert werden.

3. Verfahren nach Anspruch 2, wobei die Prozessparameter Temperatur, Expositionszeit, Flussrate eines Belüftungsmediums beinhalten sowie einen Grad der Evakuierung.

4. Verfahren nach einem vorhergehenden Anspruch, wobei durch die Infrarotinspektion der Linsenformungsoberfläche die latente Verdunstungswärme von Flüssigkeit über der Zeit bestimmt wird.

5. Verfahren nach einem der vorangehenden Ansprüche, wobei der vordefinierte Schwellenwert, der die maximale zulässige Restfeuchtigkeit auf und/oder innerhalb der Linsenformungsoberfläche der Referenzformhälfte repräsentiert, aus Infrarotinspektionen von Linsenformungsoberflächen von Formhälften erhalten wird, die als zur weiteren Verarbeitung akzeptabel befunden worden sind.

6. Verfahren nach Anspruch 5, wobei der vordefinierte Schwellenwert, der die maximale zulässige Restfeuchtigkeit repräsentiert, aus einer Auswertung von Messungen einer latenten Verdunstungswärme von Flüssigkeit über der Zeit von inspizierten akzeptablen Formhälften der gleichen Art, d. h. männlichen oder weiblichen Formhälften, erhalten wird.

7. Verfahren nach Anspruch 6, wobei der vordefinierte Schwellen(Grenz)-Wert, der die maximale zulässige (eine Grenz-) Restfeuchtigkeit repräsentiert, als die minimale Änderung einer latenten Verdunstungswärme über der Zeit definiert wird.

8. Verfahren nach einem der vorangehenden Ansprüche, wobei eine hochauflösende Infrarotkamera für die Infrarotinspektion der Linsenformungsoberfläche verwendet wird.

9. Verfahren nach Anspruch 8, wobei die hochauflösende Infrarotkamera, die für die Inspektion der Linsenbildungsoberfläche verwendet wird, eine thermische Empfindlichkeit aufweist, die besser ist als 50 mK bei 30 °C.

10. Verfahren nach einem der vorangehenden Ansprüche, wobei zusätzlich zu dem zentralen Teil die Linsenformungsoberfläche in wenigstens einem weiteren Teil inspiziert wird, der sich radial auswärts von dem zentralen Teil der Linsenformungsoberfläche befindet.

11. Verfahren nach einem der vorangehenden Ansprüche, wobei die Linsenformungsoberfläche, die mittels der Infrarotkamera inspiziert wird, die Linsenformungsoberfläche einer männlichen Formhälfte ist.

12. Verfahren nach einem der vorangehenden Ansprüche, wobei die Inspektion der Linsenformungsoberfläche nach dem Trocknen der Linsenformungsoberfläche ausgeführt wird und vor der elektrostatischen Aufladung der Linsenformungsoberfläche.

13. Automatisierte Fertigungslinie für die Fertigung ophthalmischer Linsen, zum Beispiel von Kontaktlinsen, wie etwa weichen Kontaktlinsen, welche eine Anzahl von Linsenfertigungsstationen umfasst und zusammenwirkende männliche und weibliche Formhälften beinhaltet, die zusammengesetzt werden können, um wiederverwendbare Formen für die Fertigung der ophthalmischen Linsen aus einem Linsenbildungsmaterial zu bilden, und welche eine Reinigungs-, Spül- und Trocknungsstation für die Formhälften umfasst, **dadurch gekennzeichnet, dass** sie eine Infrarotinspektionsstation zum Ausführen einer Inspektion von wenigstens einem zentralen Teil der Linsenformungsoberfläche einer Formhälfte mit Hilfe einer Infrarotkamera zum wenigstens qualitativen Bestimmen eines Grades an Restfeuchtigkeit auf und/oder innerhalb einer Linsenbildungsoberfläche der Formhälfte umfasst.

14. Fertigungslinie nach Anspruch 13, wobei die Infrarotinspektionsstation vor einer Aufladungsstation zum elektrostatischen Aufladen der Linsenformungsoberfläche von wenigstens einer der zusammenwirkenden männlichen und weiblichen Formhälften umfasst.

15. Fertigungslinie nach Anspruch 13 oder 14, wobei die Infrarotinspektionsstation eine hochauflösende Infrarotkamera beinhaltet mit einer thermischen Empfindlichkeit, die besser ist als 50 mK bei 30 °C ist.

## Revendications

1. Procédé pour déterminer une humidité résiduelle sur et/ou dans une surface de formation de lentille d'une moitié de moule, lequel procédé comprend les étapes suivantes :
effectuer une inspection infrarouge d'au moins une partie centrale de la surface de formation de lentille de la moitié de moule à l'aide d'une caméra infrarouge,
collecter des valeurs de mesure résultant de l'inspection infrarouge, qui représentent un degré d'humidité résiduelle sur et/ou dans la surface de formation de lentille,
comparer les valeurs de mesure collectées à une valeur seuil prédéterminée représentant une humidité résiduelle tolérable maximale sur et/ou dans la surface de formation de lentille d'une moitié de moule de référence, et
lors de la détection d'un dépassement de la valeur seuil prédéterminée représentant l'humidité résiduelle tolérable maximale, empêcher la moitié de moule inspectée d'être encore utilisée.

2. Procédé selon la revendication 1, dans lequel lorsque l'on empêche la moitié de moule inspectée d'être encore utilisée, la moitié de moule inspectée est renvoyée vers une station de traitement en amont de l'inspection infrarouge pour réduire encore l'humidité résiduelle, et dans lequel, éventuellement, des paramètres de processus dans la station de traitement pour réduire l'humidité résiduelle et/ou dans la surface de formation de lentille de la moitié de moule sont modifiés.

3. Procédé selon la revendication 2, dans lequel les paramètres de processus comprennent la température, le temps d'exposition, le débit d'un milieu de ventilation et le degré d'évacuation.

4. Procédé selon l'une quelconque des revendications précédentes, dans lequel, avec l'inspection infrarouge de la surface de formation de lentille, une chaleur latente d'évaporation de liquide dans le temps est déterminée.

5. Procédé selon l'une quelconque des revendications précédentes, dans lequel la valeur seuil prédéfinie représentant l'humidité résiduelle tolérable maximale sur et/ou dans la surface de formation de lentille de la moitié de moule de référence est obtenue à partir d'inspections infrarouge de surfaces de formation de lentille de moitiés de moule qui ont été jugées acceptables en vue d'un traitement ultérieur.

6. Procédé selon la revendication 5, dans lequel la valeur seuil prédéfinie représentant l'humidité résiduelle tolérable maximale est obtenue à partir d'une évaluation de mesures de la chaleur latente d'évaporation de liquide dans le temps de moitiés de moule acceptables inspectées du même type, c'est-à-dire des moitiés de moule mâles ou femelles.

7. Procédé selon la revendication 6, dans lequel la valeur seuil (limite) prédéfinie représentant l'humidité résiduelle tolérable maximale (une limite) est définie comme un changement minimal de la chaleur latente d'évaporation dans le temps.

8. Procédé selon l'une quelconque des revendications précédentes, dans lequel une caméra infrarouge haute résolution est utilisée pour l'inspection infrarouge de la surface de formation de lentille.

9. Procédé selon la revendication 8, dans lequel la caméra infrarouge haute résolution utilisée pour l'inspection de la surface de formation de lentille possède une sensibilité thermique supérieure à 50 mK à 30°C.

10. Procédé selon l'une quelconque des revendications précédentes, dans lequel, en plus de la partie centrale, la surface de formation de lentille est inspectée dans au moins une autre partie située radialement vers l'extérieur depuis la partie centrale de la surface de formation de lentille.

11. Procédé selon l'une quelconque des revendications précédentes, dans lequel la surface de formation de lentille inspectée à l'aide de la caméra infrarouge est la surface de formation de lentille d'une moitié de moule mâle.

12. Procédé selon l'une quelconque des revendications précédentes, dans lequel l'inspection de la surface de formation de lentille est effectuée après le séchage de la surface de formation de lentille et avant le chargement électrostatique de la surface de formation de lentille.

13. Ligne de fabrication automatisée pour la fabrication de lentilles ophtalmiques, par exemple des lentilles de contact comme des lentilles de contact molles, comprenant un certain nombre de stations de fabrication de lentilles et comprenant des moitiés de moule mâles et femelles qui coopèrent, qui peuvent être assemblées pour former des moules réutilisables pour la fabrication des lentilles ophtalmiques à partir d'un matériau de formation de lentille, et comprenant une station de nettoyage, de rinçage et de séchage pour les moitiés de moule, **caractérisée en ce qu'**elle comprend une station d'inspection infrarouge pour effectuer une inspection d'au moins une partie centrale de la surface de formation de lentille d'une moitié de moule à l'aide d'une caméra infrarouge pour déterminer au moins qualitativement un degré d'humidité résiduelle sur et/ou dans la surface de formation de lentille de la moitié de moule.

14. Ligne de fabrication selon la revendication 13, dans laquelle la station d'inspection infrarouge est disposée en avant d'une station de chargement pour charger électrostatiquement la surface de formation de lentille d'au moins une moitié parmi les moitiés de moule mâles et femelles qui coopèrent.

15. Ligne de fabrication selon la revendication 13 ou 14, dans laquelle la station d'inspection infrarouge comprend une caméra infrarouge haute résolution ayant une sensibilité thermique supérieure à 50 mK à 30°C.
